# EUROPEAN PATENT APPLICATION

(11) **EP 3 086 045 A1**
(43) Date of publication of application: **26.10.2016**
(21) Application number: 16020142.2
(22) Date of filing: 16.04.2016
(51) Int. Cl.: F24F 11/00

(54) **APPARATUS AND METHOD FOR AIR TREATMENT**

(30) Priority: 24.04.2015 IT PD20150087
(71) Applicant: Zoppellaro S.r.l., 35020 Codevigo (PD) (IT)
(72) Inventor: Zoppellaro, Giuseppe, 35020 Codevigo PD (IT); Zoppellaro, Francesco, 35020 Codevigo PD (IT)
(74) Representative: Baldissera, Marco Felice

(57) **Abstract**

The invention refers to an air treating apparatus comprising a reversible thermo-hygrometric processing complex of an air-to-air heat pump type for the processing, from a thermo-hygrometric viewpoint, of a pair of air flows to be treated coming from an external environment that surrounds a usage environment into a pair of treated air flows, and a conveying section placed downstream of said thermo-hygrometric processing complex to convey said pair of treated air flows to said usage environment and to the external environment. The invention also refers to an operating procedure for said apparatus

## Description

The object of the present invention is an air treating apparatus, to be especially, but not exclusively used for the air conditioning of public, commercial and industrial premises such as collective kitchens and the like. Advantageously, the invention also refers to an operating procedure for the mentioned air treating apparatus.

In the field of producing, installing, servicing and using air conditioning apparatus for the mentioned types of premises, the air treating types based on an "air-to-air heat pump" are highly appreciated. These perform the task of introducing a flow of refreshing air that has been properly treated from a thermo-hygrometric viewpoint, into a usage environment in substitution of a flow of exhausted air that has been evacuated from the mentioned usage environment. From a technical viewpoint, such an apparatus comprises above all a plurality of reversible thermo-hygrometric processing complexes of an air-to-air heat pump type, that process a pair of air flows to be treated from a thermo-hygrometric viewpoint, coming from an external environment that surrounds a usage environment, into a pair of treated air flows. Finally, this apparatus comprises conveying sections positioned downstream of such a plurality of thermo-hygrometric processing complexes, so as to convey the mentioned pair of treated air flows to the mentioned usage environment and to the external environment, respectively.
One of the technical problems encountered in this type of apparatus resides in the fact that the plurality of thermo-hygrometric processing reversible complexes operating as an evaporator are susceptible to a progressive deterioration of heat exchange efficiency due to an accumulation of solid deposits i.e. ice on the heat exchange surfaces. In accordance with the known state of the art, this problem is overcome by a periodical removal of such deposits. The relative operating procedure provides for a first phase that consists in a temporary inversion of the operating cycle of a first thermo-hygrometric processing complex. In this manner, the corresponding heat exchange unit, which operates as an evaporator under normal operating conditions, functions as a condenser releasing thermal energy which is in turn promoting a melt-off of the mentioned solid deposits. The conclusion of this first phase is followed by a second phase consisting in the temporary inversion of the operating cycle of a second thermo-hygrometric processing complex in accordance with the mentioned modes. The conclusion of this second phase is, if the mentioned complexes are more than two, followed in series by as many phases of temporary inversions of the operating cycle, minus the two phases described above, as there are thermo-hygrometric processing complexes constituting the air treating unit.

The main drawback raised in the technical solution described above consists in an undesirable and substantial lowering of the temperature of the treated air flow introduced into the usage environment, which becomes particularly pronounced if the temperature of the external environment is low. In fact, if this analysis is for the sake of simplicity limited to an air treating unit fitted with a pair of thermo-hygrometric processing complexes, the thermo-hygrometric processing complex temporarily operating in an inverted mode produces a treated air flow with a temperature lower than that of the external air, which essentially annuls the positive thermal gradient of the treated air flow produced by the thermo-hygrometric processing complex operating in a normal or direct mode.

Another drawback attributable to the mentioned technical solution consists in a substantial reduction of efficiency of the air treating unit during the phases of removing the solid deposits, namely ice. It is in fact found that the thawing or de-icing process is a progressive process, because certain areas are de-iced sooner and others later. At an advanced stage of this process, some areas are involved in a thawing of the solid deposits, namely ice, while other already de-iced areas of the heat exchange unit exchange heat with the surrounding environment, thus in fact wasting precious thermal energy to the external environment. This heat dispersion toward the external environment during the removal of the solids thus represents the source of the reduction of energy efficiency of the air treating unit.

The aim of the present invention is to set up an air treating apparatus and relative operating procedure capable of resolving the drawbacks and problems found in the solutions of the known state of the art.

Within the scope of the aim mentioned above, an important purpose of the present invention is to set up an air treating apparatus and relative operating procedure capable of promoting the removal of the mentioned solid deposits and of continuing the emission of treated, i.e. heated air toward the usage environment.

Again within the scope of the aim outlined above, an important purpose of the present invention is to set up an air treating apparatus and relative operating procedure capable of achieving a substantial energy and economic advantage.

Not the least purpose of the present invention is to set up an air treating apparatus of a simplified and durable type.

This aim, as well as these and yet other purposes that will be more clearly evidenced in the following, are achieved by an air treating apparatus and relative operating procedure in agreement with the attached claims.

In accordance with first advantageous features of the invention, the air treating apparatus consists, above all, in at least one reversible thermo-hygrometric processing complex of an air-to-air heat pump type, that performs the task of processing, from a thermo-hygrometric viewpoint, a pair of air flows to be treated coming from an external environment that surrounds a usage environment so as to return a pair of treated air flows. Finally, this apparatus comprises a conveying section positioned downstream of said thermo-hygrometric complex that performs the action of conveying said pair of treated air flows to said usage environment and to the external environment, respectively. In particular, said air treating apparatus presents the particular feature that the mentioned conveying section comprises a manoeuvrable direct and crossed releasing interface that performs the task of releasing the mentioned pair of treated air flows, in accordance with certain direct and crossed releasing configurations, toward said usage environment and the external environment.

In turn, the operating procedure to operate an air treating unit as above comprises a continuous action of detecting solid deposits on said reversible thermo-hygrometric processing complex and an inverting manoeuvre for inverting the operating cycle of said reversible thermo-hygrometric processing complex. The particular feature of said operating procedure consists in a separate crossing manoeuvre for a separate crossing of the mentioned treated air flows, which is performed simultaneously with the mentioned inverting manoeuvre of the cycle.

This combination of particular features allows achieving the aim of the invention because it is able, as will also be appreciated further on, of promoting the removal of the solid deposits, namely ice, and continuing to emit said treated i.e. heated air flow toward the usage environment.

Moreover, this combination of particular features also allows achieving a further purpose of the invention, because, as will be appreciated in the description that follows, it is able of considerably enhancing the overall performance of the apparatus, and consequently of its relative energy efficiency and economic profitability. In fact, during the thawing or squeezing produced by inverting the cycle and crossing the treated air flows, the iced heat exchange unit is from the beginning placed in connection with the usage environment, thus promptly pouring its thermal energy over to the same, and thereby thoroughly preventing any losses of energy to the external environment.

These and other advantageous aspects of the invention will be better evidenced by the description of embodiments of an air treating apparatus and relative operating procedure according to the invention, as illustrated for indicative yet non-limiting purposes in the attached drawings, in which:
- Figure 1 represents a partially exploded prospective view of an air treating apparatus according to the invention, according with a first mode of work;
- Figure 1.1 represents a simplified view of the conveying section of the air treating apparatus of Figure 1, in its relative operating configuration;
- Figure 2 represents a partially exploded prospective view of the air treating apparatus of Fig. 1, according with a second mode of work;
- Fig. 2.1 represents a simplified view of the conveying section of the air treating apparatus of Fig. 2, in its relative operating configuration;
and the reference numbers are presented as follows:
10 Air treating apparatus
12 Reversible thermo-hygrometric processing complex of an air-to-air heat pump type
13 Conveying section
15 Manoeuvrable direct/crossed releasing interface 16,22,24 Enclosing structure
17, 18 First and second heat exchange units
19 Compression device
20 Expansion device
21 4-way communicating and 2-way working position inverting valve
23 Separating partition
50, 60 Flows of air to be treated
70, 80 Flows of treated air
151, 152, 153, 154 First, second, third and fourth passing device
200 Usage environment
300 External environment
500 Direct releasing configuration
510 Crossed releasing configuration

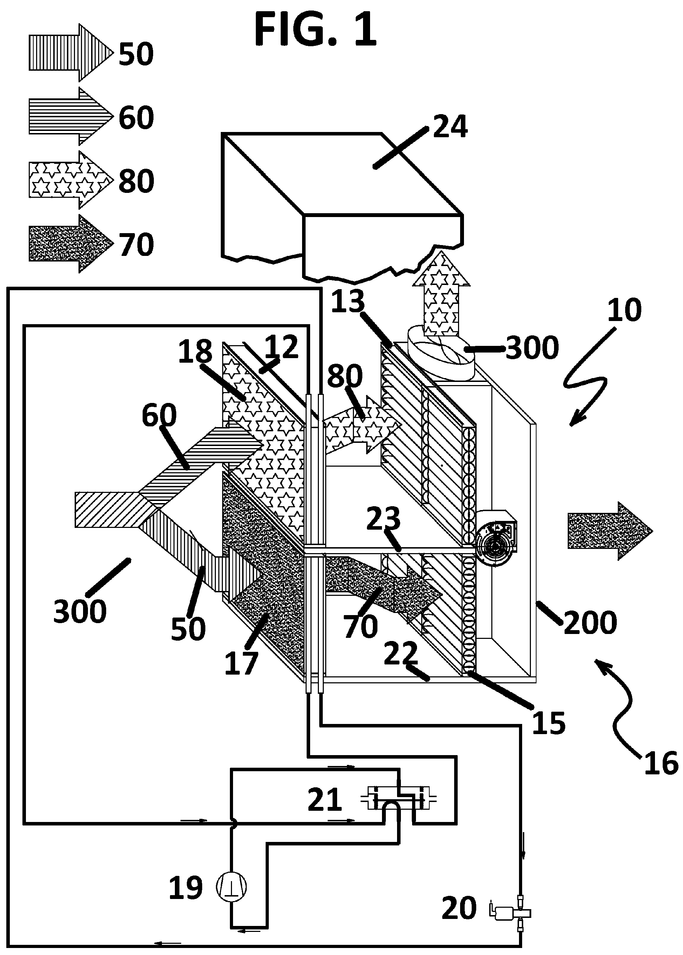

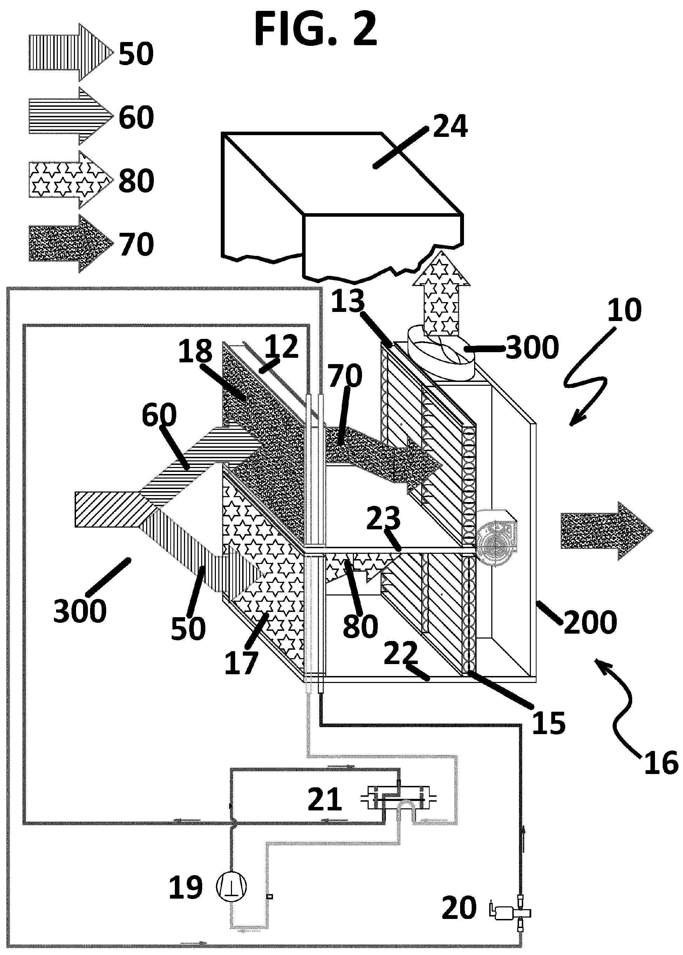

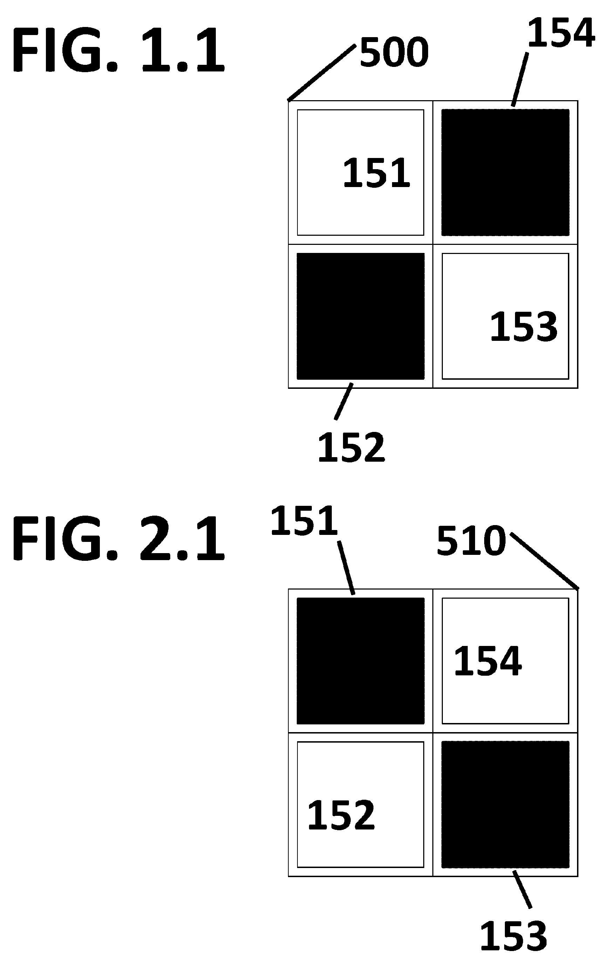

With reference to the Figures 1, 1.1, 2, and 2.1, the air treating apparatus comprises above all a reversible thermo-hygrometric processing complex of an air-to-air heat pump type 12, which has the task of processing, from a thermo-hygrometric viewpoint, a pair of air flows 50, 60 to be treated coming from an external environment 300 which surrounds said usage environment 200, and of returning a pair of properly treated air flows 70, 80. Moreover, said apparatus 10 comprises a conveying section 13 placed downstream of said thermo-hygrometric processing complex 12, which is taking care of conveying the mentioned pair of treated air flows 70, 80 to said usage environment 200 and to the external environment 300, respectively.
In turn, said conveying section 13 comprises a manoeuvrable direct/crossed releasing interface 15 to release said pair of treated air flows 70, 80 in accordance with a direct releasing configuration 500, as illustrated in detail in Figure 1.1, and in accordance with a crossed releasing configuration 510, as illustrated in detail in Figure 2.1, to said usage environment 200 and to the external environment 300.

More in detail and with reference to the Figures 1.1 and 2.1, said manoeuvrable direct/crossed releasing interface 15 comprises a first and a second passing device 151, 152 placed in a left upper and lower position, respectively, as well as in an air passing connection with said external environment 300, and further comprises a third and a fourth passing device 153, 154 placed in a right lower and upper position, as well as in an air passing connection with said usage environment 200.

Consequently, the mentioned manoeuvrable direct/crossed releasing interface 15 in a direct releasing configuration 500, as illustrated in detail in Figure 1.1, provides for the following: said first passing device 151 in an open configuration, said second passing device 152 in a closed configuration, said third passing device 153 in an open configuration and said fourth passing device 154 in a closed configuration.

Consequently again, said manoeuvrable direct/crossed releasing interface 15 in a crossed releasing configuration 510, as illustrated in detail in Figure 2.1, provides for: said first passing device 151 in a closed configuration, said second passing device 152 in an open configuration, said third passing device 153 in a closed configuration and said fourth passing device 154 in an open configuration.

Finally, the mentioned reversible thermo-hygrometric processing complex of an air-to-air heat pump type 12 is above all made of an enclosing structure 16, 22, 24 to enclose the working space of said reversible complex 12, of a first and a second heat exchange unit 17, 18 inserted into said enclosing structure 16, 22, 24 and placed upstream of said conveying section 13, as well as of a separating partition 23 inserted between said first and second heat exchange units 17, 18 to separate said treated air flows 70, 80 from each other. Moreover, said thermo-hygrometric processing complex 12 is made of a compression device 19 indirectly connected at the inlet and outlet of the first terminals of said first and second heat exchange units 17, 18, of an expansion device 20 connected at the inlet and outlet to the second terminals of said first and second heat exchange units 17, 18, of a 4-way communicating and 2-way working inverting valve 21 interposed between the first terminals of said first and second heat exchange units 17, 18 and said compression device 19, and finally of a working fluid which performs a thermodynamic cycle as in a refrigerator, by using said first and second heat exchange units 17, 18, said compression device 19 and said expansion device 20.

With reference now to the description outlined and all the figures mentioned above, the operating procedure for operating this air treating apparatus 10 essentially consists in a continuous action of detecting solid deposits, namely ice, in said thermo-hygrometric processing complex of an air-to-air heat pump type 12. In a positive case, said procedure provides an inversion manoeuvre for inverting the thermodynamic cycle of the working fluid in said reversible complex 12, and a separate crossing manoeuvre for separately crossing said treated air flows 70, 80, which are performed simultaneously with said inverting manoeuvre. In detail, said inverting manoeuvre is carried out with a direct commuting action, which commutes the mentioned inverting valve 21 from a first working position to a second working position. This crossing manoeuvre is in turn carried out with simultaneous actions of direct reconfiguration, that reconfigure said manoeuvrable direct/crossed releasing interface 15 from said direct releasing configuration 500 to said crossed releasing configuration 510. It is noted that a subsequent detection of solid deposits in the thermo-hygrometric processing complex 12 determines a new inverting manoeuvre and a simultaneous new crossing manoeuvre, and so on.

In the light of the above, it has been in practice verified that the air treating apparatus and relative operating procedure achieve the envisioned aim, purposes and tasks. In conclusion, further advantageous features of the invention are pointed out in the fact that the apparatus can technically be produced while using components that are standardized in the air treating sector, with a resulting limitation of production and installation costs.

The air treating apparatus and relative operating procedure according to the invention are susceptible to numerous modifications and variants, all of which fall within the realm of the same inventive concept.

In a practical embodiment, the materials employed, the shapes, dimensions and executive details may differ from but be technically equivalent to those outlined above, without thereby abandoning the scope of the invention.

## Claims

1. Air treating apparatus (10) comprising at least one reversible thermo-hygrometric processing complex of an air-to-air heat pump type (12) to process, from a thermo-hygrometric viewpoint, a pair of air flows to be treated (50, 60) coming from an external environment (300) that surrounds said usage environment (200) into a pair of treated air flows (70, 80), at least one conveying section (13) positioned downstream, with respect to said pair of treated air flows (70, 80), of said at least one thermo-hygrometric processing complex (12) in order to convey said pair of treated air flows (70, 80) to said usage environment (200) and to said external environment (300), respectively, **characterized in that** said conveying section (13) comprises a manoeuvrable direct/crossed releasing interface (15) so as to release said pair of treated air flows (70, 80), according to direct/crossed releasing configurations (500, 510) to said usage environment (200) and to said external environment (300).

2. Air treating apparatus (10) according to claim 1, **characterized in that** said manoeuvrable direct/crossed releasing interface (15) comprises a first passing device (151) placed in a left upper position and in air flow connection with said external environment (300), a second passing device (152) placed in a left lower position and in air flow connection with said external environment (300), a third passing device (153) placed in a right lower position and in air flow connection with said usage environment (200), and a fourth passing device (154) placed in a right upper position in air flow connection with said usage environment (200).

3. Air treating apparatus (10) according to the former claims, **characterized in that** said manoeuvrable direct/crossed releasing interface (15) according to said direct releasing configurations (500) comprises said first passing device (151) in an open configuration, said second passing device (152) in a closed configuration, said third passing device (153) in an open configuration and said fourth passing device (154) in a closed configuration.

4. Air treating apparatus (10) according to the claims from 1 to 2, **characterized in that** said manoeuvrable direct/crossed releasing interface (15) according to said crossed releasing configuration (510) comprises said first passing device (151) in a closed configuration, said second passing device (152) in an open configuration, said third passing device (153) in a closed configuration and said fourth passing device (154) in an open configuration.

5. Air treating apparatus (10) according to the former claims, **characterized in that** said reversible thermo-hygrometric processing complex of an air-to-air heat pump type (12) comprises an enclosing structure (16, 22, 24) to delimit the working space of said reversible complex (12), at least a first and a second heat exchange unit (17, 18) inserted into said delimiting structure (16, 22, 24) and placed upstream of said conveying section (13), a separating partition (23) inserted between said first and said second heat exchange units (17, 18) so as to reciprocally separate said treated air flows (70, 80), a compression device (19) indirectly connected at the inlet and outlet of the first terminals of said first and second heat exchange units (17, 18), an expansion device (20) connected at the inlet and outlet of the second terminals of said first and second heat exchange units (17, 18), a 4-way communicating and 2-way working position inverting valve (21) interposed between said first terminals of said first and second heat exchange units (17, 18) and said compression device (19), and a working fluid that performs a thermodynamic cycle across said first and second heat exchange units (17, 18), said compression device (19) and said expansion device (20).

6. Operating procedure for operating an air treating apparatus (10) according to claim 1 and the following claims, comprising a continuous action of detecting solid deposits such as ice in said thermo-hygrometric processing complex of an air-to-air heat pump type (12) and an inverting manoeuvre to invert the thermodynamic cycle of the working fluid in said reversible complex (12), **characterized in that** it comprises a separate crossing manoeuvre for separately crossing said flows of treated air (70, 80) that are effected simultaneously with said inverting manoeuvre.

7. Operating procedure according to the former claim, **characterized in that** said inverting manoeuvre comprises a direct commuting action to commute said inverting valve (21) from a first working position to a second working position.

8. Operating procedure according to the former claims, **characterized in that** said crossing manoeuvre comprises simultaneous direct reconfiguring actions to reconfigure said manoeuvrable direct/crossed releasing interface (15) from said direct releasing configuration (500) to said crossed releasing configuration (510).

9. Operating procedure according to the former claims, **characterized in that** said inverting manoeuvre comprises an inverted commuting action to commute said inverting valve (21) from said second working position to said first working position.

10. Operating procedure according to the former claims, **characterized in that** said crossing manoeuvre comprises simultaneous inverted reconfiguring actions to reconfigure said manoeuvrable direct/crossed releasing interface (15) from said crossed releasing configuration (510) to said direct releasing configuration (500.)
